# EUROPÄISCHE PATENTSCHRIFT

(11) **EP 1 748 960 B1**
(45) Veröffentlichungstag und Bekanntmachung des Hinweises auf die Patenterteilung: **14.01.2015**
(21) Anmeldenummer: 04804573.6
(22) Anmeldetag: 25.11.2004
(51) Int. Cl.: C02F 3/32

(54) **VERWENDUNG EINER PFLANZENKLÄRANLAGE ZUM REINIGEN VON ABWASSER+**
USE OF A PLANT-BASED SEWAGE TREATMENT SYSTEM FOR PURIFYING WASTER WATER
UTILISATION D'UNE STATION D'EPURATION DE TYPE VEGETAL POUR EPURER DES EAUX USEES

(30) Priorität: 07.05.2004 DE 102004023170
(43) Veröffentlichungstag der Anmeldung: 07.02.2007
(73) Patentinhaber: Deere & Company, Moline, IL 61265-8098 (US)
(72) Erfinder: BAUER, Hartmut, 67136 Fussgönheim (DE)
(74) Vertreter: Magin, Ludwig Bernhard
(86) Internationale Anmeldenummer: PCT/EP2004/053100
(87) Internationale Veröffentlichungsnummer: WO 2005/115931

(56) Entgegenhaltungen:
- DE-A1- 19 630 830
- DE-A1- 19 630 831
- DE-A1- 19 750 276
- GB-A- 2 375 761

## Beschreibung

Die Erfindung betrifft eine Pflanzenkläranlage zum Reinigen von Abwasser.

In vielen industriellen Unternehmen entstehen produktionsbedingt verschiedene Abwässer. Normalerweise wird Abwasser durch technische Verfahren in Kläranlagen gereinigt. Zur Reinigung von kleineren Abwasserströmen bzw. Abwassermengen werden schon seit längerer Zeit alternativ zu beispielsweise herkömmlichen Kläranlagen so genannte naturnahe Verfahren eingesetzt. Beim Einsatz von naturnahen Verfahren werden die Selbstreiningsmechanismen der Natur genutzt und zudem neue Feuchtbiotope und Grünflächen geschaffen. Außerdem sind solche naturnahen Verfahren mit erheblicher Kostenersparnis verbunden.

Pflanzenkläranlagen, wie sie schon vielerorts verwendet werden, gehören zu diesen naturnahen Verfahren. Eine Pflanzenkläranlage beruht auf einer biologischen Symbiose zwischen speziell gezüchteten Wasserpflanzen und Mikroorganismen, wie zum Beispiel Bakterien, Pilze und Algen.

Bisherige Pflanzenkläranlagen werden hauptsächlich von privaten Haushalten und Kommunen betrieben und werden zumeist dort eingesetzt, wo ein Anschluss an eine zentrale Abwasserreinigung zu kostenintensiv ist. Bei diesen Anlagen sind die Pflanzen auf Erde, Kies oder Sand (d.h. in einem Substrat) gepflanzt. Üblicherweise benötigen die Pflanzenkläranlagen jedoch verhältnismäßig große Flächen, die insbesondere in Industriebetrieben meistens nicht vorhanden sind. Lediglich beispielhaft wird auf die DE 196 30 831 C2 verwiesen, aus welcher eine Pflanzenkläranlage bekannt ist. Aus GB2375761 ist auch eine Dachpflanzenkläranlage bekannt. Der vorliegenden Erfindung liegt daher die Aufgabe zugrunde, eine Verwendung einer Pflanzenkläranlage zum Reinigen von Abwasser anzugeben und weiterzubilden, durch welche die vorgenannten Probleme überwunden werden. Insbesondere soll die erfindungsgemäße Pflanzenkläranlage auch bei geringem Platzbedarf betreibbar sein, vorzugsweise im Privatbereich und/oder bei Industriebetrieben.

Die Aufgabe wird erfindungsgemäß durch die Lehre des Patentanspruchs 1 gelöst. Demgemäß umfasst die Pflanzenkläranlage zum Reinigen von Abwasser mindestens einem Pflanzenbehälter, eine Zuführeinheit, mit welcher das zu reinigende Abwasser der Pflanzenkläranlage zuführbar ist, eine Abführeinheit, mit welcher das gereinigte Abwasser von der Pflanzenkläranlage abführbar ist. In dem Pflanzenbehälter sind Pflanzen angeordnet. Bevorzugt ist der Pflanzenbehälter zumindest größtenteils nach oben geöffnet. Die Pflanzen sind derart ausgebildet, dass sie in dem Pflanzenbehälter ohne Substrat angeordnet sind. Zumindest ein Teil des Pflanzenbehälters ist auf einem Gebäudedach angeordnet. Erfindungsgemäß ist zwischen dem Pflanzenbehälter und dem Gebäudedach zumindest bereichsweise ein Zwischenraum vorgesehen, durch welchen Luft oder ein Austauschmedium aus dem Gebäude leitbar ist.

Erfindungsgemäß ist zunächst erkannt worden, dass in einem bereits bestehenden Industriebetrieb, Industriegebiet oder in einem Wohngebiet keine neuen Flächen für Bodenkörper für eine Pflanzenkläranlage geschaffen werden müssen, wenn die Pflanzenkläranlage auf einem Gebäudedach - z.B. auf einem Dach einer Produktionshalle eines Industriebetriebs - installiert wird. Die Pflanzenkläranlage könnte hierbei derart konzipiert sein, dass sie auf einem Flachdach eines Gebäudes installiert werden kann, insbesondere auf bereits bestehenden Produktionshallen. Bei bereits bestehenden Produktionshallen ist darauf zu achten, dass die zulässige Dachlast einer solchen Produktionshalle durch die Pflanzenkläranlage nicht überschritten wird. Dies ist insbesondere dann möglich, wenn auf das Substrat, in welchem die Pflanzen der Pflanzenkläranlage üblicherweise angeordnet sind, verzichtet werden kann. Daher sind die Pflanzen der Pflanzenkläranlage derart ausgewählt worden, dass industrielles und/oder sanitäres Abwasser ohne das übliche Substrat bzw. den Bodenkörper gereinigt werden kann, so dass die Dächer ohne baustatische Eingriffe genutzt werden können.

Somit baut die Pflanzenkläranlage durch den Verzicht auf das übliche Substrat nicht nur kleiner und nimmt hierbei weniger Oberfläche in Anspruch, sondern wird auch in ganz besonders vorteilhafter Weise vom Gewicht her leichter, so dass die Pflanzenkläranlage auf einem bereits bestehenden Gebäudedach installiert werden kann. Dies wiederum hat den Vorteil, dass mit der Pflanzenkläranlage das Abwasser dort gereinigt werden kann, wo es entsteht, nämlich in dem jeweiligen Gebäude, auf dessen Dach die Pflanzenkläranlage installiert ist. Hierdurch ist eine besonders kostengünstige Infrastruktur realisierbar, da beispielsweise keine Kanalsysteme vorzusehen sind, mit welchen das Abwasser aus verschiedenen Gebäuden gesammelt und in einem zentralen Becken zwischengespeichert werden muss. Diese Lösung ist auch dann ganz besonders von Vorteil, wenn das Gebäude überhaupt nicht an ein Abwasserkanalsystem angeschlossen ist, wie es beispielsweise bei Aussiedlerhöfen der Fall sein kann.

Der Zwischenraum könnte am einfachsten dadurch gebildet werden, dass der bzw. die Pflanzenbehälter von dem Gebäudedach beabstandet angeordnet sind. Hierbei könnte der Abstand zwischen Gebäudedach und Pflanzenbehälter ein oder wenige Zentimeter betragen. Grundsätzlich könnte der Abstand bzw. Zwischenraum dadurch gebildet werden, dass der Pflanzenbehälter auf Balken aufgelegt oder befestigt angeordnet ist, wobei die Balken beabstandet voneinander auf dem Gebäudedach angeordnet sind. Somit ist der Zwischenraum durch das Gebäudedach, der dem Gebäudedach zugewandten Wand des Pflanzenbehälters und den Balken gebildet. Gegebenenfalls können Abdichtmittel - z.B. in Form von Moosgummi - vorgesehen sein, um den so gebildeten Zwischenraum gegenüber der Umgebung abzudichten. Bevorzugt werden Holzbalken verwendet, wodurch in ganz besonders vorteilhafter Weise eine erfindungsgemäße Pflanzenkläranlage leicht im Gewicht und kostengünstig implementiert werden kann.

Es wäre auch denkbar, dass im Konkreten ein Pflanzenbehälter auf einer Konstruktion in einem vorgebbaren Abstand zum Gebäudedach beabstandet angeordnet wird. Eine solche Konstruktion könnte beispielsweise Abstandsmittel oder Pfeiler aufweisen, wobei hierbei zu beachten ist, dass die vorgebbare maximale Dachlast nicht überschritten wird. Somit könnte der Zwischenraum nahezu über die gesamte, dem Gebäudedach zugewandten Fläche des Pflanzenbehälters gebildet sein.

Es ist auch denkbar, dass ein Pflanzenbehälter mittelbar oder unmittelbar auf dem Gebäudedach angeordnet ist, dass jedoch mindestens ein Schacht bzw. mehrere Luftschächte unter einem oder zwischen mehreren Pflanzenbehältern vorgesehen ist bzw. sind, durch welche (n) die Luft oder das Austauschmedium aus dem Gebäude hindurchgeleitet werden kann.

Der Zwischenraum könnte gemäß einer bevorzugten Ausführungsform von einem Teil des Gebäudedachs, von einem dem Gebäudedach zugewandten Teil des Pflanzenbehälters beziehungsweise Pflanzenbeckens und von mindestens einer Wand begrenzt werden, wobei eine Wand sich zwischen Gebäudedach und Pflanzenbehälter bzw. Pflanzenbecken erstreckt bzw. angeordnet ist und dazu geeignet ist, den Zwischenraum gegenüber der äußeren Umgebung des Gebäudes abzudichten. Eine Wand könnte beispielsweise aus Moosgummi gebildet sein, welche am äußeren Rand eines Pflanzenbeckens zwischen Pflanzenbecken und Gebäudedach eingeklemmt ist. Es kann ein Eintritt und/oder ein Austritt für Luft aus der Umgebung in den Zwischenraum vereinzelt vorgesehen sein, um beispielsweise einen Kamineffekt zu unterstützen, auf welchen später noch eingegangen wird.

Es werden Pflanzen eingesetzt, deren Wurzeln sich nach spezieller Züchtung so ausgebildet haben, dass sie zunächst ohne Substrat im Wasser sich an einer definierten Stelle befinden und insbesondere dort stehen, beispielsweise auf dem Boden des Pflanzenbehälters. Falls der Pflanzenbehälter mit einer Teichfolie versehen ist, stehen die Pflanzen direkt auf dieser Teichfolie und reinigen das durch den Pflanzenbehälter geleitete Wasser in ihrem Wurzelraum in Symbiose mit den dort lebenden Mikroorganismen. Im Laufe der Zeit können sich Ablagerungen bilden, die jedoch nicht unter den Begriff "Substrat" im Sinn der vorliegenden Erfindung zu sehen sind. Unter dem Begriff "Substrat" im Sinn der vorliegenden Erfindung ist vielmehr ein Bodensystem mit einem natürlichen Bodenkörper im Sinne von Kickuth, siehe beispielsweise ATV-Handbuch, biologische und weitergehende Abwasserreinigung, Ernst & Sohn, Berlin, 4. Auflage, 1997, bzw. ein künstlich zusammengesetzter Bodenkörper aus verschiedenen Komponenten zu verstehen. Die Ablagerungen können von Zeit zu Zeit entfernt werden. Die geeigneten Pflanzen werden derart ausgebildet, dass sie an die klimatischen Verhältnisse und an die Abwassereigenschaften angepasst sind. Idealerweise werden sie in einer geeigneten Reihenfolge in den Becken angeordnet, wobei die Reihenfolge der Anordnung der Pflanzen speziell auf die Eigenschaften des zu reinigenden Wassers ausgerichtet sein können, z.B. den Verschmutzungsgrad, den pH-Wert, den Salzgehalt und/oder den Schwermetallanteil.

Grundsätzlich könnte das Gebäudedach ein Flachdach oder ein Spitzdach aufweisen. Ein Gebäudedach in Form eines Flachdaches wird üblicherweise bei Industriehallen oder Bungalows, ein Gebäudedach in Form eines Spitzdaches insbesondere bei privaten Wohnhäusern vorliegen. Dementsprechend ist vorgesehen, die erfindungsgemäße Pflanzenkläranlage sowohl in industriellen als auch im privaten Bereich einzusetzen beziehungsweise zu nutzen.

Ganz besonders bevorzugt wird die Luft oder das Austauschmedium aus dem Gebäude an einer unteren Seite eines Spitzdachs des Gebäudes in einen Zwischenraum eingeleitet. Dies könnte beispielsweise mit Hilfe eines Ventilators erfolgen. Bei entsprechender Ausgestaltung des Zwischenraums sorgt der Kamineffekt dafür, dass wärmere Luft des Gebäudes in dem Zwischenraum nach oben steigt. Wenn an der obersten Stelle des Spitzdachs ein den Zwischenraum mit dem Gebäudeinneren verbindender Spat oder Durchgang vorgesehen ist, kann die abgekühlte Luft zumindest teilweise zurück in das Gebäude geleitet werden, die in dem Gebäude wieder nach unten fällt. Dadurch kann eine im Gebäude vorgesehene Klimaanlage im Sommer eingespart oder auf niederer Stufe betrieben werden (Kostenvorteil). Im Winter wird durch die erwärmte Hallenluft die Pflanzenkläranlage von unten bzw. vom Zwischenraum her beheizt. Hierdurch kann die erfindungsgemäße Pflanzenkläranlage auch im Winter zumindest bis zu einer bestimmten unteren Außentemperatur betrieben werden, da das zu reinigende Wasser in dem Pflanzenbehälter nicht gefriert.

Eine erfindungsgemäße Pflanzenkläranlage könnte grundsätzlich lediglich einen Pflanzenbehälter aufweisen. Vorzugsweise sind mehrere Klärbecken, Sektionen bzw. Pflanzenbecken vorgesehen, in welchen die Pflanzen eingebracht sind. Die Pflanzenbecken sind bezüglich eines unmittelbaren Wasserdurchflusses voneinander getrennt. Somit können mehrere Pflanzenbecken in einem Verbund - zum Beispiel nebeneinander - angeordnet werden, wodurch in ganz besonders vorteilhafter Weise eine modulare Bauweise der Pflanzenkläranlage möglich ist und Pflanzenbehälter bzw. Pflanzenbecken dennoch an gegebene Verhältnisse des Gebäudedachs einfach und kostengünstig angepasst werden können. Es ist auch denkbar, dass ein großes Becken beispielsweise Trennwände aufweist, die derart angeordnet sind, dass dadurch einzelne Pflanzenbecken oder Klärbecken gebildet sind oder dass ein vorgegebener Wasserstrom-Parcours gebildet ist, entlang dem das zu reinigende Wasser fließt.

Gemäß einer besonders bevorzugten Ausführungsform sind mindestens zwei Pflanzenbehälter und/oder mindestens zwei Pflanzenbecken kaskadenförmig zueinander angeordnet. Diese Pflanzenbehälter/Pflanzenbecken könnten jeweils zueinander einen Höhenunterschied aufweisen, so dass das zu reinigende Wasser von einem höher angeordneten Pflanzenbecken zu einem niedrigeren angeordneten Pflanzenbecken allein aufgrund des Höhenunterschieds und der Schwerkraft fließen kann, ohne das beispielsweise eine Wasserpumpe erforderlich ist.

Ein Pflanzenbehälter und/oder ein Pflanzenbecken ist vorzugsweise zumindest größtenteils aus leichtem Baumaterial gebildet, beispielsweise aus Aluminium. Gleiches gilt für eine Konstruktion zum Befestigen eines Pflanzenbehälters auf dem Gebäudedach. Somit kann die Pflanzenkläranlage insgesamt eine einfache Bauweise aufweisen, die kostengünstig herstellbar ist. So könnte beispielsweise eine Aluminium- oder Holzkonstruktion, die aufgrund der Materialauswahl ein geringes Gewicht aufweist, vorgesehen sein, mit welcher das Pflanzenbecken gebildet ist.

Diese Aluminium- und/oder Holzkonstruktion könnte dann mit einer Teichfolie versehen werden, so dass die Konstruktion abgedichtet ist und kein Wasser aus dem Pflanzenbehälter auf das Dach ausläuft. Grundsätzlich könnte ein Pflanzenbehälter und/oder ein Pflanzenbecken zum Abdichten mit einer Folie abdichtbar sein.

Die Pflanzenkläranlage, also insbesondere ein Pflanzenbehälter und/oder ein Pflanzenbecken, wird mit Schmutzwasser bevorzugt horizontal und/oder vertikal durchströmt. Hierzu können entsprechende Verbindungsmittel zwischen einzelnen Pflanzenbecken und/oder wasserstromleitende Mittel, beispielsweise in Form von Wandabschnitten in den Becken, vorgesehen sein. Ganz besonders bevorzugt erfolgt hierbei die horizontale und/oder vertikale Durchströmung mit Schmutzwasser passiv, es sind also keine oder nur vereinzelt elektrisch zu betreibende Pumpen oder Schaufelräder vorzusehen.

Gemäß einer ganz besonders bevorzugten Ausführungsform fällt das zu reinigende Wasser von einem Pflanzenbehälter und/oder einem Pflanzenbecken zu einem benachbart angeordneten Pflanzenbehälter und/oder einem Pflanzenbecken frei, insbesondere an einer Abreiskante und/oder in Form eines Wasserfalls. Diese Maßnahme dient insbesondere zum Zuführen von Sauerstoff der Umgebung in das zu reinigende Wasser. So könnten beispielsweise mehrere Pflanzenbecken in unterschiedlichen Höhen angeordnet sein, so dass das Wasser allein aufgrund der Schwerkraft von dem höheren in das niedriger angeordnete Pflanzenbecken fließt. Alternativ hierzu könnten Rohrstücke in Verbindung mit Pumpen vorgesehen sein, die das Wasser aus einem Pflanzenbecken - sozusagen über die Trennwand - oder unmittelbar von der Zuführeinheit in das nachgeordnete Pflanzenbecken pumpen beziehungsweise transportieren, wobei zur Realisierung eines künstlichen Wasserfalls eine gewisse freie Fallstrecke vorgesehen ist, über welche das Wasser - vorzugsweise aufgefechert beispielsweise über eine Kante oder mit einem Mittel, welches einer Tülle/Gießaufsatz einer Gießkanne vergleichbar ist - in das Becken fällt.

Insbesondere wenn die Pflanzenkläranlage auf einem Flachdach installiert ist, könnte es erforderlich sein, dass das zu reinigende Wasser von einem Pflanzenbehälter und/oder einem Pflanzenbecken zu einem benachbart angeordneten Pflanzenbehälter und/oder einem Pflanzenbecken aktiv förderbar ist, beispielsweise mittels einer Pumpe. Mit anderen Worten wird ein aktives Fördern des zu reinigenden Wassers insbesondere dann erforderlich sein, wenn die Pflanzenbehälter und/oder Pflanzenbecken im Wesentlichen auf dem gleichen Niveau angeordnet sind.

Mit der Zuführeinheit ist bevorzugt das zu reinigende Wasser mit einer Temperatur der Pflanzenkläranlage zuführbar, welche im Wesentlichen der Raumtemperatur des Gebäudes entspricht, beispielsweise von 10 bis 30 Grad Celsius. Hierdurch kann die erfindungsgemäße Pflanzenkläranlage in ganz besonders vorteilhafter Weise auch im Winter betrieben werden, da das Wasser im Winter nicht gefriert. Grund hierfür ist, dass das zu reinigende Wasser üblicherweise mit einer Raumtemperatur in die Pflanzenkläranlage beziehungsweise Dachbepflanzungsanlage eingeleitet wird. Auch die Tatsache, dass das zu reinigende Wasser eine Fließgeschwindigkeit aufweist, führt dazu, dass das Wasser eben nicht gefriert. Die Anlage kann beispielsweise bei Außentemperaturen bis -20° C arbeiten.

Insbesondere zum Optimieren der Klärwirkung ist das zu reinigende Wasser mit einer vorgebbaren Fließ- bzw. Strömungsgeschwindigkeit durch einen Pflanzenbehälter/ein Pflanzenbecken förderbar. Dies könnte beispielsweise durch die in die Pflanzenkläranlage pro Zeitintervall eingeleitete Menge des zu reinigenden Wassers realisiert werden. Letztendlich ist eine bestimmte Fließ- bzw. Strömungsgeschwindigkeit des zu reinigenden Wassers von den konkreten Eigenschaften der Pflanzenkläranlage abhängig, insbesondere von der Anordnung der Pflanzen in dem Pflanzenbehälter und von den Pflanzensorten, aber auch von dem Grad der Verschmutzung des zu reinigenden Wassers. Insoweit könnte eine Art Regelkreis realisiert werden, bei welchem die Fließ- bzw. Strömungsgeschwindigkeit des zu reinigenden Wassers in der Pflanzenkläranlage in Abhängigkeit von dem Reinheitsgrad des gereinigten Wassers derart eingestellt wird, dass ein möglichst hoher Reinheitsgrad erzielbar ist.

Eine optimierte Klärwirkung könnte beispielsweise auch dadurch erreicht werden, dass das zu reinigende Wasser in unterschiedlichen Reihenfolgen durch das Pflanzenbecken bzw. durch die Pflanzenbehälter leitbar ist, wodurch die Klärwirkung der Pflanzenkläranlage variierbar ist. Diese Maßnahme könnte insbesondere dann angewandt werden, wenn die Art der Verschmutzung des zu reinigenden Wassers variiert. So könnte beispielsweise ein mit Schwermetallen stark versetztes zu reinigendes Wasser an einer Stelle in die Pflanzenkläranlage eingebracht werden, wo Pflanzen angeordnet sind, die hauptsächlich zur Anlagerung bzw. zum Abbau von Schwermetallen geeignet sind. Von dort aus kann das dann in der Schwermetallkonzentration reduzierte zu reinigende Wasser durch die restliche Pflanzenkläranlage geleitet werden. Es ist auch denkbar, einzelne Bereiche/Abschnitte der Pflanzenkläranlage auszulassen, wenn die dort angeordneten Pflanzen zur Reinigung des konkret vorliegenden verschmutzten Wassers keinen wesentlichen Beitrag liefern können. Auch ist es denkbar, das zu reinigende Wasser an einer beliebigen Stelle in die Pflanzenkläranlage einzubringen, so dass bezogen auf die in der Pflanzenkläranlage vorgesehene Fließrichtung des zu reinigenden Wassers die Pflanzen nicht zur Reinigung beitragen, die in Fließrichtung vor der Einleitstelle angeordnet sind.

Ganz besonders bevorzugt sind bezogen auf die Fließrichtung des zu reinigenden Wassers Pflanzen bestimmter Pflanzensorten in den einzelnen Pflanzenbecken anordenbar und/oder verwendbar, wodurch die Pflanzenkläranlage auf eine bestimmte Klärwirkung abstimmbar ist. Hierdurch wird im Wesentlichen eine Grundkonfiguration der Pflanzenkläranlage definiert, welche jedoch durch die bereits beschriebenen Maßnahmen veränderbar ist.

Bevorzugt sind in einem Pflanzenbehälter oder in einem Pflanzenbecken lediglich Pflanzen einer einzigen Pflanzensorte vorgesehen sein. Ganz besonders bevorzugt sind in jedem Pflanzenbecken reine Pflanzensorten vorgesehen, in keinem der Pflanzenbecken herrscht also eine Mischkultur vor. Dies kann insbesondere bezüglich des Wachstums der Pflanzen von Vorteil sein, da lediglich eine Population von Pflanzen mehr oder weniger gleichmäßig wächst. Wenn hingegen zwei unterschiedliche Pflanzensorten in einem Pflanzenbecken angeordnet sind, kann im Laufe der Zeit die eine Pflanzensorte aufgrund Ihres schnelleren Wachstums die andere Pflanzensorte verdrängen, so dass sich hierdurch letztendlich die Klärwirkung der Pflanzenkläranlage unter Umständen nachteilig verändern kann.

Zwischen den Pflanzenbehältern und/oder zwischen den Pflanzenbecken könnten Mittel vorgesehen sein, mit welchen das zu reinigende Wasser gefördert werden kann und/oder mit welchen das Niveau bzw. die Wasserhöhe in den einzelnen Pflanzenbehältern bzw. den Pflanzenbecken einstellbar ist. Im Konkreten könnte ein solches Mittel zwei benachbart angeordnete Pflanzenbehälter miteinander verbinden und ein im Wesentlichen L-förmig ausgebildetes Rohr aufweisen, welches vorzugsweise mit seinem längeren Rohrabschnitt im Wesentlichen horizontal angeordnet ist. Die Rohrverbindungen könnten bezüglich der Längsachse des längeren Rohrabschnitts drehbar angeordnet sein, so dass der kürzere Rohrabschnitt in Abhängigkeit seiner Orientierung letztendlich das Wasserniveau in dem Pflanzenbecken einstellt.

In einer ganz besonders bevorzugten Ausführungsform sind der Pflanzenbehälter und/oder die Pflanzenbecken samt Inhalt derart ausgebildet und angeordnet, dass eine vorgebbare Dachlast unter Berücksichtigung einer eventuell auftretenden Schneelast oder eines starken Regenfalls nicht überschritten wird. Falls also die Pflanzenkläranlage im Winter bei starkem Schneefall zugeschneit werden sollte, ist eben nicht zu befürchten, dass das Dach unter der Last der Pflanzenkläranlage einbricht.

Pflanzenkläranlagen können - eine entsprechende Anordnung auf einem Dachbereich eines Gebäudes vorausgesetzt - in ganz besonders vorteilhafter Weise zur Klimaregulierung in dem Gebäude dienen. Voraussetzung hierfür kann insbesondere sein, dass eine entsprechende Ansteuerung der Pflanzenkläranlage hinsichtlich der Fließmenge des Schmutzwassers und/oder eines permanent ausgetauschten Mediums, zum Beispiel Luft oder Gas oder eine Flüssigkeit, vorliegen muss. Der Aufbau des Daches könnte derart sein, dass sich die Temperatur des Gebäudes darunter und die Temperatur der Pflanzenkläranlage in einem permanenten Austausch miteinander befinden. Insoweit kann in ganz besonders vorteilhafte Weise die Pflanzenkläranlage gleichzeitig als Klimaanlage für das Gebäude genutzt werden, wodurch sich ein weiterer Synergieeffekt ergibt. Es wird nämlich nicht nur Abwasser gereinigt, sondern es wird auch das Gebäude, in welchem eventuell das Abwasser anfällt, klimatisiert. Dies kann insbesondere mit Hilfe des durch den Zwischenraum geleiteten Austauschmediums bzw. Luft realisiert werden. Auch ist aufgrund des auf dem Gebäudedach angeordneten Pflanzenbehälters das Gebäudedach im Sommer nicht der direkten Sonneneinwirkung ausgesetzt. Somit erwärmt sich also das Gebäude nicht in dem Maß wie das der Fall wäre, wenn keine Pflanzenkläranlage auf dem Gebäudedach angeordnet wäre.

Ganz besonders bevorzugt könnte die Pflanzenkläranlage die im Folgenden beschriebenen Eigenschaften bzw. Merkmale aufweisen:
Es sind verschiedene Pflanzenbecken vorgesehen, welche beispielsweise nebeneinander angeordnet sind und welche insbesondere geringfügige Höhen- beziehungsweise Niveauunterschiede relativ zueinander aufweisen. Es sind mehrere Pflanzenbecken vorgesehen, so dass durch eine modulartig ausgebildete Bauweise eine Leistungssteigerung der Pflanzenkläranlage erzielbar ist.
Es sind Pflanzen in jedem Becken vorgesehen. Bevorzugt ist - im Gegensatz zur DE 196 30 831 A1 - kein extra Eingangs- und Ausgangsbecken großer Oberfläche ohne Pflanzenbewuchs vorgesehen, so dass bei der erfindungsgemäßen Pflanzenkläranlage die vorgesehenen Eingangs- und Ausgangsbecken ebenfalls zur Pflanzenklärung genutzt werden können oder nur einen geringen Platzbedarf erfordern.

Mit einer Pflanzenkläranlage kann eine Wetterdatenerfassung erfolgen, indem beispielsweise die Wasserstände in den einzelnen Pflanzenbecken der Pflanzenkläranlage detektiert werden, beispielsweise durch Schwimmer oder ähnliche Wasserstandsdetektoren. Bei einer Kenntnis der in die Pflanzenkläranlage eingebrachten Schmutzwassermenge, des von der Pflanzenkläranlage ablaufenden gereinigten Wasseranteils bezogen auf ein Zeitintervall kann der Verdunstungsgrad des Wassers in der Pflanzenkläranlage berechnet werden, was wiederum Rückschlüsse auf das in dem Zeitintervall vorliegende Wetter ermöglicht.

Die Pflanzenkläranlage kann sowohl für Industrieabwasser als auch für sanitäre Abwasser genutzt werden, eine entsprechende Anpassung bzw. Ausrichtung der Pflanzenkläranlage kann insbesondere durch die Verwendung bestimmter Pflanzensorten beziehungsweise die Anordnung bestimmter Pflanzensorten in den einzelnen Pflanzenbecken bezogen auf die Fließrichtung des Schmutzwassers erzielt werden.

Bevorzugt werden Pflanzenbecken dann vertikal und/oder horizontal mit dem zu reinigenden Abwasser bzw. Schmutzwasser durchströmt. Insbesondere bei sanitären Applikationen der Wasserklärung wird das Schmutzwasser üblicherweise mit einer Schmutzwasserpumpe auf das Dach gebracht und durchläuft dann die einzelnen Pflanzenbecken beziehungsweise Pflanzenkammern, wo es von Schmutzpartikeln gereinigt wird. Um eine Geruchsentstehung zu vermeiden ist bevorzugt ein (kleiner) Wasserfall in die Pflanzenkläranlage eingebaut, der eine ständige Sauerstoffzufuhr von dem Sauerstoff aus der Umgebung bewirkt. Ganz besonders bevorzugt ist der Wasserfall zwischen zwei Pflanzenbecken angeordnet und weist beispielsweise eine längliche Abfließkante mit einer vorgebbaren Breite auf, über welche das Wasser fließt und zumindest über eine kleine vorgebbare Distanz frei fällt.

Ganz besonders vorteilhaft ist die Tatsache, dass die Pflanzenkläranlage in der Summe reinen Sauerstoff für die Umwelt produziert. Alle Anlagen mit Bodenkörper und alle Kläranlagen produzieren Kohlendioxid.

Im Folgenden werden die Eigenschaften der verwendeten Pflanzensorten kurz aufgeführt. Die C. Paniculata speichert hauptsächlich den Nährstoff Phosphat. Sie speichert Nährstoffe eines hoch belasteten Abwasserstroms um diese dann bei geringerer Belastung wieder abzugeben. Die Juncus Effesus und Juncus Inflexus, welche beispielsweise in einem Zwischenspeicher angeordnet sein könnten, die Phragmites Communis und die Iris Pseudacorus reichern das Wasser sehr gut mit Sauerstoff an. Vor allem im Vor- und Speicherbecken können die Eigenschaften der C. Paniculata eingesetzt werden um hohe Stoßbelastungen aufzufangen und einen möglichst hohen Nährstoffstrom zu gewährleisten. Außerdem kann sie durch ihren großen Körper und Wurzelteppich im Sommer große Mengen Wasser aufnehmen und verdampfen. Die vor der C. Paniculata eingesetzten Pflanzen Ph. Communis, Scirpus Lacustris und Iris Pseudacorus stellen sich als Nährstoffverwerter dar.

Die Verweilzeit der Volumenelemente in einer Pflanzenkläranlage kann experimentell bestimmt werden. So kann bei industriellem. Abwasser eine optimale Reinigungsleistung der Pflanzen bei einer Durchflussgeschwindigkeit bei 1,2 m³/h bei einer Pflanzenkläranlage mit einer wirksamen Oberfläche von ca. 140 m² liegen. Die Pflanzenkläranlage ist in der Lage, Kohlen- und Stickstoffverbindungen abzubauen sowie Phosphate und Schwermetalle zu speichern und somit dem zu reinigenden Wasser zu entziehen. Üblicherweise werden die Pflanzen ein oder zweimal im Jahr geschnitten, so dass die Pflanzen ihre Haupttätigkeiten bzw. ihr Wachstum auf den Wurzelbereich konzentrieren. Untersuchungen haben ergeben, dass sich die Phosphate und Schwermetalle lediglich im Wurzelbereich der Pflanzen ablagern, nicht jedoch in den Blättern der Pflanzen. Insoweit sind die geschnittenen Blätter der Pflanzen sogar kompostfähig und müssen nicht, beispielsweise in Form von Sondermüll, teuer entsorgt werden.

Ganz besonders vorteilhaft ist die platzsparende Anwendung auf dem Dach. Die Dachkonstruktion wird wegen der Leichtbauweise gewählt und weil Dächer überall zur Verfügung stehen.

Grundsätzlich kann die Prozesssicherheit einer Pflanzenkläranlage gewährleistet werden, und zwar insbesondere durch Pflanzen (insbesondere durch die Auswahl spezieller Sorten), durch die räumliche Anordnung der Pflanzen im Pflanzenbehälter und durch die vorgebbare Mindest-Oberfläche in Quadratmeter pro Person im Fall von sanitärem Abwasser. Dies ist insbesondere wichtig für eine gewerbliche Zulassung einer solchen Anlage, wenn sie immissionsschutzrechtlich bei dem Amt für Baurecht und Umweltschutz beantragt wird.

Weiterhin sei ausdrücklich darauf hingewiesen, dass die Pflanzenkläranlage auch nachts arbeitet, also eine Nachtaktivität der Pflanzen ohne Licht vorliegt. Weiterhin vorteilhaft ist eine Pflanzenkläranlage auf dem Dach im Fall eines Feuers, da dann das dort befindliche Wasser zum Brandschutz dienen kann. Mit der Pflanzenkläranlage kann das Abwasser um ca. 50 Prozent reduziert werden, was in erster Linie durch eine Wasserverdampfung in der Pflanzenkläranlage bewirkt wird. Mit einer erfindungsgemäßen Pflanzenkläranlage wird - wie bereits angedeutet - in ganz besonders vorteilhafter Weise Sauerstoff produziert. Insoweit kann diese Tatsache zum Emissionshandel genutzt werden, da ein Industriebetrieb mit einer erfindungsgemäßen Pflanzenkläranlage hierdurch mehr CO2 emittieren kann, da die Pflanzenkläranlage Sauerstoff produziert und der höheren CO2-Emission gegengerechnet werden kann. Natürlich dient die erfindungsgemäße Pflanzenkläranlage in erster Linie zum Reduzieren von Abwasser, so dass dies eine Möglichkeit zur Erfüllung der Auflagen darstellt, welche in dem Bundesemmisionsschutzgesetz vorgeschrieben sind.

In ganz besonders vorteilhafter Weise kann durch die Pflanzenkläranlage eine Kostenreduzierung des anfallenden Industrie- und/oder Sanitärabwassers erfolgen, da hohe Kosten für eine industrielle Entsorgung des Abwassers eingespart werden können.

Üblicherweise Arbeiten die Pflanzen einer Pflanzenkläranlage mindestens 20 Jahre, so dass nach einer anfänglichen Investition - insbesondere bezüglich der Anschaffung der Pflanzen - sich eine solche Anlage sehr schnell amortisiert. In der Regel fallen auch keine Dachreparaturen an, da das Dach den Witterungsbedingungen, beispielsweise Sonne, Hagel oder Schnee, aufgrund der Pflanzenkläranlage nicht ausgesetzt ist. Die Tatsache, dass Grünpflanzen auf den Dächern der Gebäude angeordnet sind, vermittelt den Menschen, und insbesondere den Mitarbeitern eines Industriebetriebs, eine Positive Umgebung und hiermit verbunden eine Wohlfühlgarantie.

Es gibt nun verschiedene Möglichkeiten, die Lehre der vorliegenden Erfindung in vorteilhafter Weise auszugestalten und weiterzubilden. Dazu ist insbesondere auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine Draufsicht eines Ausführungsbeispiels einer Pflanzenkläranlage,
- Fig. 2: eine Seitenansicht eines erfindungsgemäßen Ausführungsbeispiels einer Verwendung eine Pflanzenkläranlage,
- Fig. 3: eine Draufsicht des Ausführungsbeispiels aus Fig. 2,
- Fig. 4: eine Draufsicht eines zweiten Ausführungsbeispiels einer Pflanzenkläranlage,
- Fig. 5: eine Draufsicht eines dritten Ausführungsbeispiels einer Pflanzenkläranlage und
- Fig. 6: eine Seitenansicht eines weiteren Ausführungsbeispiels der vorliegenden Erfindung.

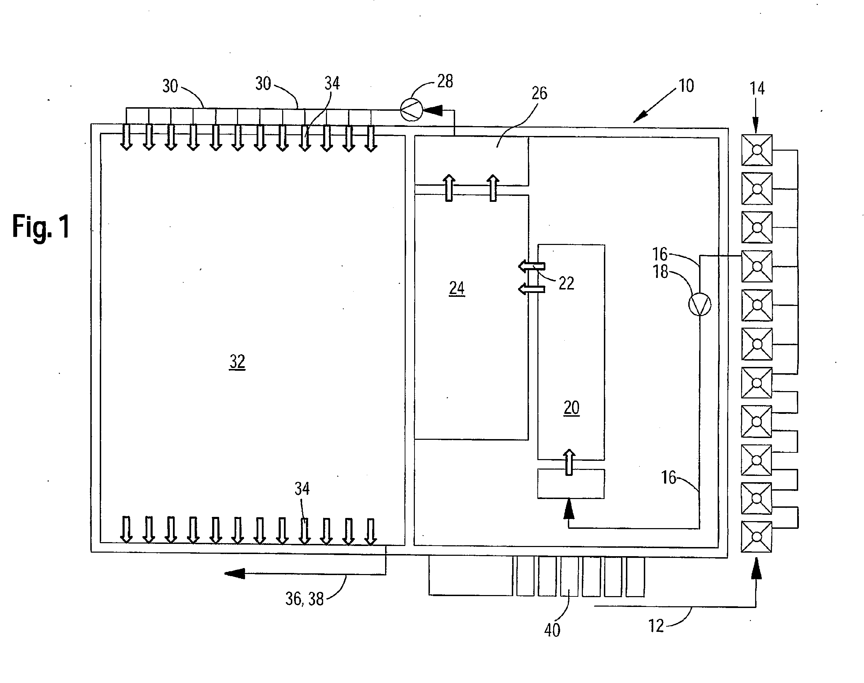

Fig. 1 zeigt eine Pflanzenkläranlage 10 in der Draufsicht für ein Flachdach bei einer industriellen Anwendung. Das zu reinigende Wasser wird über die lediglich schematisch mit dem Pfeil 12 gekennzeichnete Zuleitung der Pflanzenkläranlage 10 zugeführt. Das zu reinigende Wasser wird in mehreren ebenerdig angeordneten Dekantern 14 zum Sedimentieren geleitet. Über die Leitung 16, welche der Zuführeinheit der Pflanzenkläranlage 10 zugeordnet ist, wird mit Hilfe der Pumpe 18 das zu reinigende Wasser in das Vorbecken 20 gepumpt beziehungsweise geleitet.

Über den lediglich schematisch angedeuteten Wasserfall 22 fällt das zu reinigende Wasser in den Zwischenspeicher 24. Der Zwischenspeicher 24 ist hierbei optional, er dient zum Ausgleich von Abwasserspitzen, das heißt von beispielsweise unerwartet hohen Wassermengen pro Zeitintervall. Mit anderen Worten handelt es sich bei dem Zwischenspeicher 24 um einen Retentionsbehälter. Von dort aus fließt es in ein Zwischenbecken 26, aus welchem mit Hilfe der Pumpe 28 das zu reinigende Wasser über die Leitungen 30 dem Hauptbecken 32 zugeführt wird. Das in das Hauptbecken 32 geleitete Wasser durchfließt in Pfeilrichtung 34 das Hauptbecken 32, und wird über die Leitungen 36 zu den lediglich schematisch angedeuteten Auslauf 38 geleitet. An dieser Stelle sei betont, dass ein Teil des der Pflanzenkläranlage 10 zugeleiteten Wassers in den Becken 20, 24, 32 auch verdunsten kann. Die auf dem Gebäudedach angeordneten Becken 20, 24, 32 sind über die Treppen 40 zugänglich.

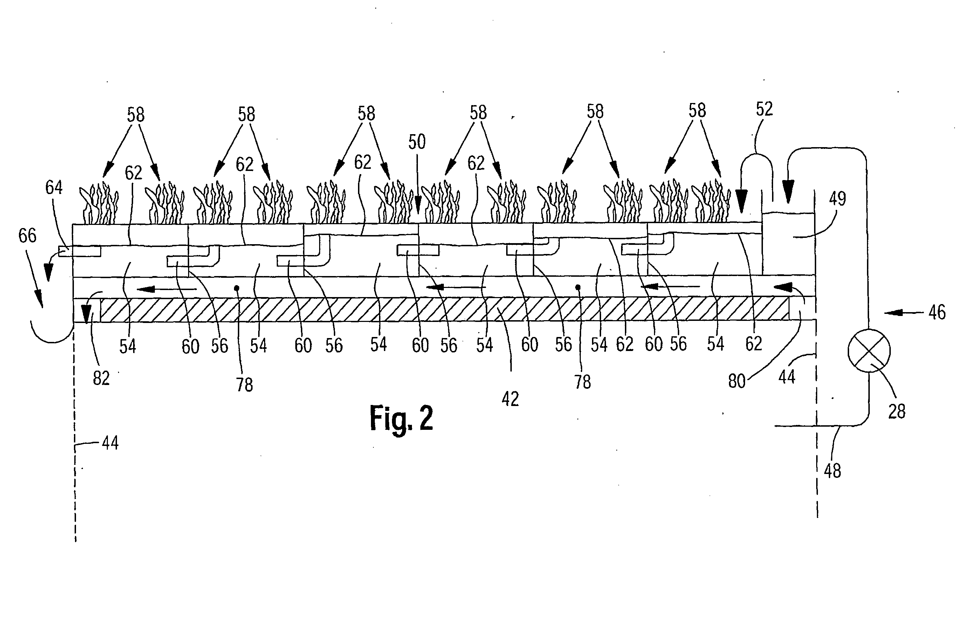

Fig. 2 zeigt in einer Seitenansicht ein weiteres Ausführungsbeispiel einer erfindungsgemäßen Pflanzenkläranlage 10. Die Pflanzenklärlage 10 ist auf einem Dach 42 eines schematisch durch Striche angedeuteten Gebäudes 44 installiert. Die Pflanzenkläranlage 10 aus Fig. 2 umfasst eine Zuführeinheit 46, welche Leitungen 48 sowie eine Pumpe 28 aufweist, mit welcher das zu reinigende Wasser in den Einfüllbehälter 49 verbringbar ist. Von dort aus wird das zu reinigende Wasser in den Pflanzenbehälter 50 der Pflanzenkläranlage 10 geleitet, was lediglich schematisch mit dem Pfeil 52 angedeutet ist. Der Pflanzenbehälter 50 umfasst insgesamt sechs Pflanzenbecken 54, welche jeweils voneinander mit einer Trennwand 56 getrennt sind. In jedem dieser Pflanzenbecken 54 sind Pflanzen 58 angeordnet. Somit befindet sich in jedem Pflanzenbecken 54 Wasser und entsprechend Pflanzen 58. Die einzelnen Pflanzenbecken 54 sind über Rohrverbindungen 60 miteinander verbunden. Die Rohrverbindungen 60 haben eine L-Form, wobei der längere Rohrabschnitt einer Rohrverbindung 60 horizontal angeordnet ist und zwei benachbarte Pflanzenbecken 54 miteinander verbindet. Der kürzere Rohrabschnitt der Rohrverbindung 60 kann um die Längsrichtung des längeren Rohrabschnitts verdreht werden und somit mit seiner endseitigen Öffnung in verschiedenen Höhen in einem Pflanzenbecken 54 ausgerichtet werden. Dementsprechend stellt sich das Wasserniveau 62 in den einzelnen Pflanzenbecken 54 unterschiedlich ein, was in Fig. 2 schematisch dargestellt ist: das rechte Pflanzenbecken 54 weist ein hohes Wasserniveau 62 auf, das zur linken Seite benachbarte Pflanzenbecken 54 weist diesbezüglich ein niedrigeres Wasserniveau 62 auf und das wiederum zur linken Seite benachbarte Pflanzenbecken 54 weist ein noch niedrigeres Wasserniveau 62 auf. Die Fließrichtung des Wassers in Fig. 2 ist vom rechten Pflanzenbecken 54 zum linken Pflanzenbecken 54, bis das Wasser durch das Rohr 64 in den Abfluss 66 gelangt. Das Wasserniveau beträgt bevorzugt ca. 5 bis 20 cm.

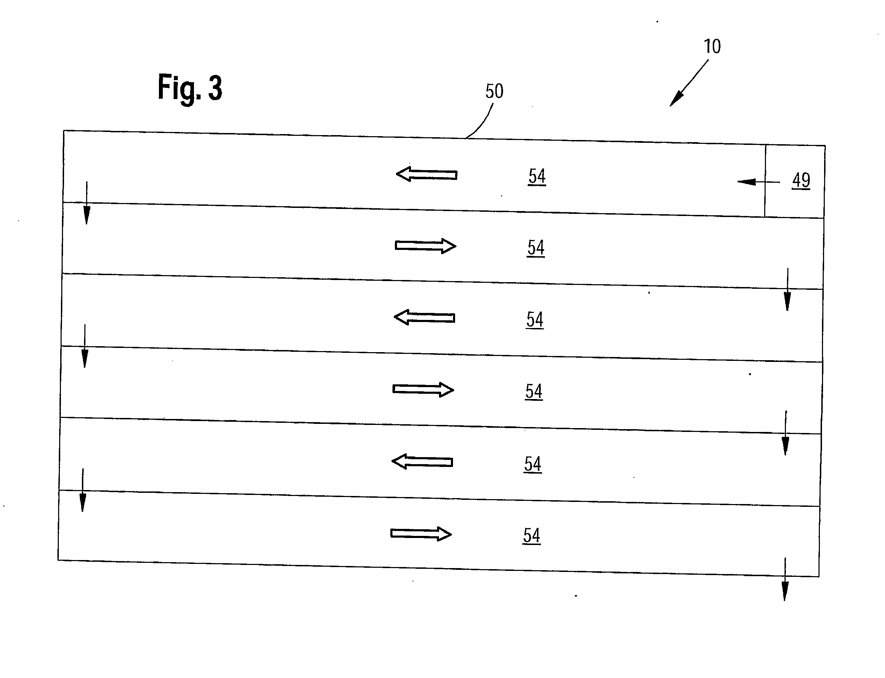

Fig. 3 zeigt in einer schematischen Darstellung das Ausführungsbeispiel der Pflanzenkläranlage 10 aus Fig. 2 in der Draufsicht. Gleiche oder ähnliche Baugruppen in den Figuren sind mit den gleichen Bezugszeichen gekennzeichnet. Durch einzelne Pfeile ist die Fließrichtung des zu reinigenden Wassers in dem Pflanzenbehälter 50 und im Konkreten in den einzelnen Pflanzenbecken 54 angedeutet. So wird das zu reinigende Wasser von dem Einfüllbehälter 49 aus in das erste Pflanzenbecken 54 von rechts nach links geleitet, am Ende des ersten Pflanzenbeckens 54 dann in das benachbarte Pflanzenbecken 54. In dem zweiten Pflanzenbecken 54 fließt das Wasser von links nach rechts. Am Ende dieses Pflanzenbeckens 54 wird es dann in das nächste Pflanzenbecken 54 geleitet. Mit anderen Worten durchläuft das zu reinigende Wasser die in Fig. 3 gezeigte Pflanzenkläranlage schlangenlinien- bzw. mäanderförmig.

Das in den Fig. 2 und 3 gezeigte Ausführungsbeispiel der erfindungsgemäßen Pflanzenkläranlage 10 ist insbesondere für den Sanitärbereich geeignet. Für sanitäre Anwendungen wird das Wasser nebst Fäkalien zunächst mit einer in den Figuren nicht gezeigten Häckseleinheit verkleinert beziehungsweise zerhackt, damit eine homogene Lösung vorliegt. Für den Sanitärbereich benötigt man an Pflanzenfiäche ca. 7 m² pro Person im Idealfall, 5 m² sind jedenfalls ausreichend.

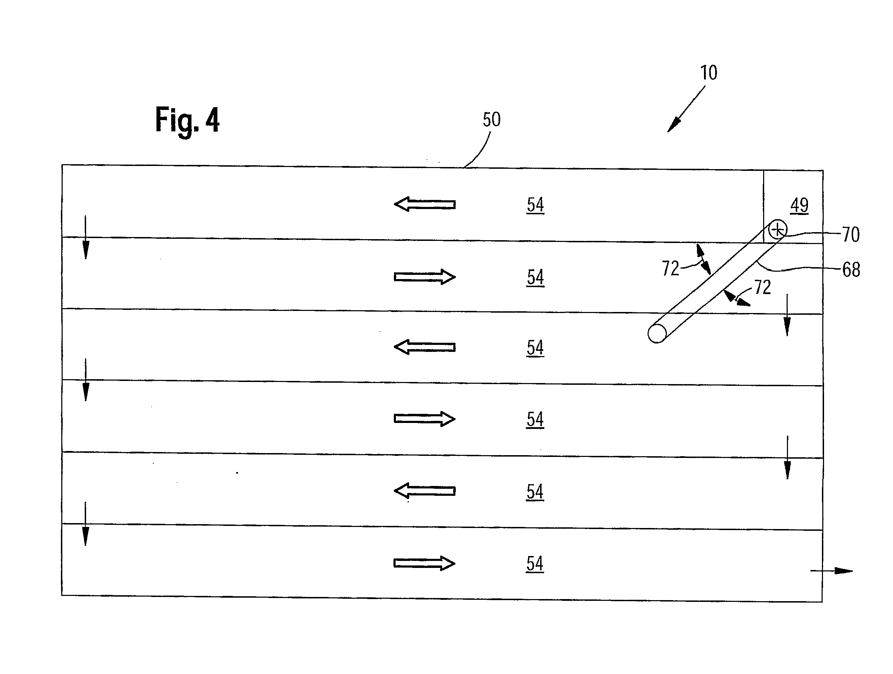

Fig. 4 zeigt in einer schematischen Darstellung ein weiteres Ausführungsbeispiel einer erfindungsgemäßen Pflanzenkläranlage 10. Hierbei ist die grundsätzliche Fließrichtung des zu reinigenden Wassers vergleichbar zu der in Fig. 3. Allerdings sind in dem Ausführungsbeispiel gemäß Fig. 4 Mittel 68 vorgesehen, mit welchen das zu reinigende Wasser an verschiedenen Stellen des Pflanzenbehälters 50 bzw. der Pflanzenbecken 54 eingeleitet werden kann. Das Mittel 68 ist in Form eines teleskopierbaren Rohrs ausgebildet, kann also in seiner Länge verändert werden. Weiterhin ist das Mittel 68 um die mit einem Kreuz dargestellt Achse 70 in die Pfeilrichtung 72 drehbar angeordnet, so dass mit dem Mittel 68 das zu reinigende Wasser grundsätzlich an jede beliebige Stelle des Pflanzenbehälters 50 eingeleitet werden kann.

Alternativ zu der in Fig. 4 gezeigten Möglichkeit, das zu reinigende Wasser an verschiedenen Positionen durch Drehen und Teleskopieren des Rohrs in dem Pflanzenbehälter 50 einzuleiten, könnten auch mit Hilfe eines in lediglich einer Richtung orientierten, jedoch quer zu dieser Richtung positionierbaren Rohrs eingeleitet werden, wobei auch in diesem Fall das Rohr längenverstellbar beziehungsweise teleskopierbar ist. Alternativ hierzu könnten mehrere parallel zueinander ausgerichtete Rohre vorgesehen sein, die ebenfalls längenverstellbar sind und durch die wahlweise das zu reinigende Wasser geleitet werden könnte, entsprechend angesteuerte Umschaltventile vorausgesetzt. Durch das Einleiten des zu reinigenden Wassers - insbesondere für sanitäre Anwendungen - an unterschiedlichen Stellen im Pflanzenbehälter 50 wird einer Geruchsbildung beziehungsweise einer räumlich begrenzten Sättigung entgegengewirkt.

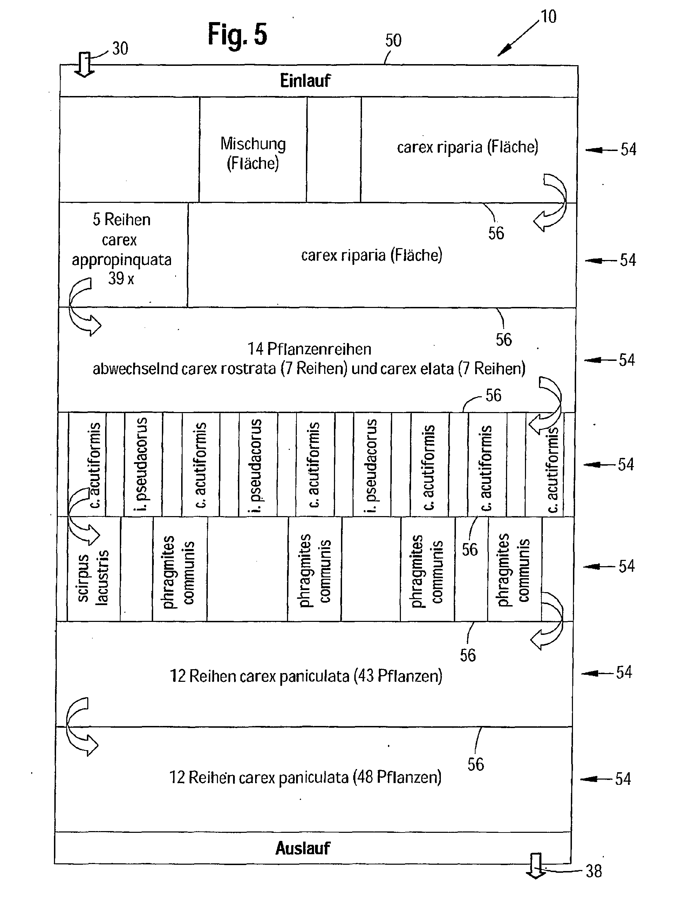

Fig. 5 zeigt ein Ausführungsbeispiel einer Pflanzenkläranlage 10, welche für einen industriellen Einsatz optimiert ist. Hierbei wird das Wasser in ähnlicher Weise wie auch in dem in Fig. 3 gezeigten Ausführungsbeispiel durch den Pflanzenbehälter 50 geleitet. Insgesamt sind sieben Pflanzenbecken 54 vorgesehen, welche sich jeweils von dem rechten Ende des Pflanzenbehälters 50 bis zum linken Ende des Pflanzenbehälters 50 erstrecken. Ebenfalls lediglich schematisch sind die einzelnen Flächen angedeutet, an denen Pflanzen unterschiedlicher Sorte angeordnet sind, wobei beispielsweise im dritten Pflanzenbecken 54 von oben zwei Pflanzensorten alternierend angeordnet sind, nämlich die Carex Rostrata und die Carex Elata. In dem Pflanzenbecken 54 darunter sind insgesamt neun Reihen von Pflanzen angeordnet, wobei es sich hierbei um drei Pflanzenreihen der Sorte C. Actuiformis und - in Fließrichtung des zu reinigenden Wassers nachgeordnet - weitere sechs Reihen von Pflanzensorten handelt, wobei hier jeweils zwei Pflanzensorten alternierend in den einem angeordnet sind, beginnend mit der Pflanzensorte Iris Pseudacorus, gefolgt jeweils von der Pflanzensorte C. Actuiformis.

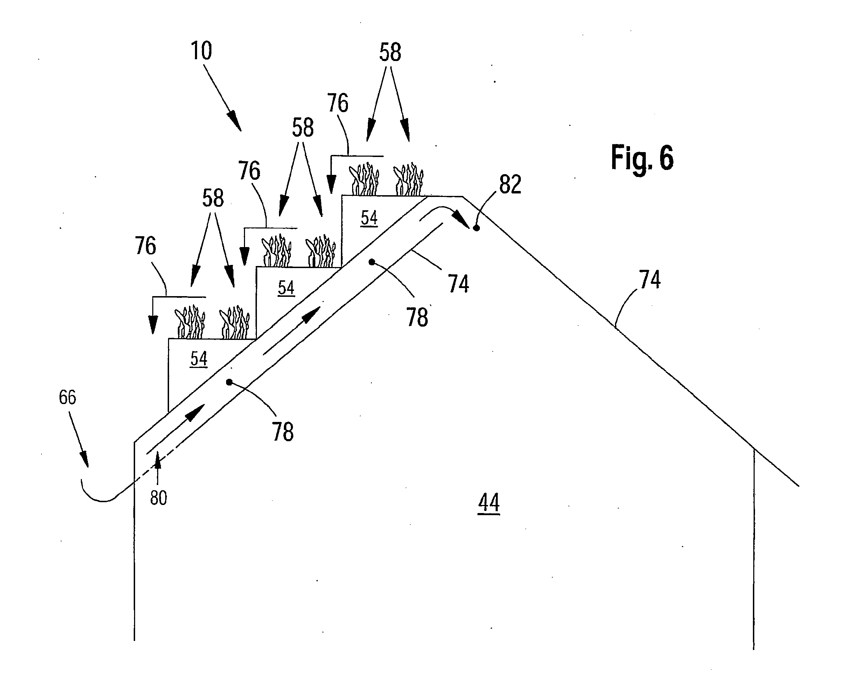

Fig. 6 zeigt in einer Seitenansicht ein weiteres Ausführungsbeispiel einer erfindungsgemäßen Pflanzenkläranlage 10. Diese Pflanzenkläranlage ist auf einem Spitzdach 74 angeordnet. Die Pflanzenkläranlage 10 in Fig. 6 weist mehrere Pflanzenbecken 54 auf, welche seitlich versetzt und jeweils untereinander an die Form des Spitzdachs angepasst angeordnet sind. Auch hier wird beispielsweise mit Hilfe einer in Fig. 6 nicht gezeigten Pumpe das Wasser in das oberste Pflanzenbecken 54 eingeleitet, von wo aus es - wie schematisch mit den Pfeilen 76 angedeutet - in das jeweils darunter angeordnete Pflanzenbecken 54 überläuft. Hierbei kann ebenfalls ein Wasserfall realisiert sein. Nachdem das Wasser die Pflanzenbecken 54 durchlaufen hat, wird es über den Abfluss 66 abgeleitet.

Auch bei dem Flachdach 42 aus Fig. 2 ist in erfindungsgemäßer Weise ein Zwischenraum 78 zwischen dem Pflanzenbehälter 50 bzw. den Pflanzenbecken 54 vorgesehen. Auf der rechten Seite ist ein Lufteintritt 80 vorgesehen, durch welchen Luft aus dem Gebäude 44 eintritt und in Pfeilrichtung von rechts nach links zu dem Luftaustritt 82 durch den Zwischenraum 78 geleitet wird. Hierbei findet zwischen der durch den Zwischenraum 78 geleiteten Luft und dem in den Pflanzenbecken 54 befindlichen Wassers ein Wärmeaustausch statt, so dass die aus dem Luftaustritt 82 austretenden Luft abgekühlt zurück in das Gebäude 44 geleitet wird. Diese Luftzirkulation durch den Zwischenraum 78 wird von einem in Fig. 2 nicht gezeigten Ventilator unterstützt bzw. angesteuert. Auf der rechten Dachhälfte könnte ebenfalls eine erfindungsgemäße Pflanzenkläranlage vorgesehen sein.

Ganz allgemein kann es sich bei dem Abfluss 66 um ein Mittel handeln, mit welchem das Wasser in einen Kanal oder in eine Regentonne oder zur Wiederverwendung geleitet wird, zum Beispiel für eine erneute Toilettenspülung.

In erfindungsgemäßer Weise ist zwischen der Pflanzenkläranlage 10 und dem Dach 74 ein Zwischenbereich 78 vorgesehen, durch welchen ein Austauschmedium oder sich im Gebäude 44 befindliche Luft geleitet werden kann. In dem Ausführungsbeispiel gemäß Fig. 6 steigt warme Luft im Gebäude 44 an der linken unteren Seite 80 in den Zwischenbereich 78 ein, steigt dort nach oben - durch die Pfeile in Fig. 6 angedeutet - und tritt in dem oberen mittleren Bereich 82 wieder in das Gebäude 44 ein. Bei dem Aufsteigvorgang der Luft kühlt diese ab, so dass im Sommer durch die erfindungsgemäße Ausbildung des Gebäudes 44 in Verbindung mit der Pflanzenkläranlage 10 das Gebäude 44 in besonders vorteilhafter Weise durch den Kamineffekt gekühlt werden kann. Weiterhin ist das Dach 74 des Gebäudes 44 aufgrund der vorgesehenen Pflanzenkläranlage 10 einer geringeren Sonnenbelastung ausgesetzt. Im Winter kann die Pflanzenkläranlage 10 durch die erwärmte Luft im Gebäude 44 leicht erwärmt werden, so dass die Pflanzenkläranlage 10 auch im Winter betrieben werden kann, weil durch die Wärmeübertragung das Wasser nicht gefriert.

Die Luftzirkulation durch den Zwischenbereich 78, das heißt von der Stelle 80 bis zur Stelle 82, kann lediglich aufgrund des Kamineffekts erfolgen, allerdings könnten auch Ventilatoren oder Gebläse vorgesehen sein, welche die Luftzirkulation beschleunigen oder erhöhen. Auch könnte an dem mittleren Bereich 82 ein in Fig. 6 nicht gezeigtes Ablenkblech oder eine Leitwand und vorgesehen sein, welches beispielsweise im Wesentlichen vertikal angeordnet sein könnte und durch welches die abgekühlte Luft in eine bestimmte Richtung innerhalb des Gebäudes 44 geleitet werden könnte.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Verwendung einer Pflanzenkläranlage zum Reinigen von Abwasser, mit mindestens einem Pflanzenbehälter (50, 54), einer Zuführeinheit (46), mit welcher das zu reinigende Abwasser der Pflanzenkläranlage (10) zuführbar ist, mit einer Abführeinheit (38), mit welcher das gereinigte Abwasser von der Pflanzenkläranlage (10) abführbar ist, mit in dem Pflanzenbehälter (50, 54) angeordneten Pflanzen (58), wobei die Pflanzen (58) derart ausgebildet sind, dass sie in dem Pflanzenbehälter (50, 54) ohne Substrat angeordnet sind, wobei zumindest ein Teil des Pflanzenbehälters (50, 54) auf einem Gebäudedach (42, 74) angeordnet ist, **dadurch gekennzeichnet, dass** zwischen dem Pflanzenbehälter (50, 54) und dem Gebäudedach (42, 74) zumindest bereichsweise ein Zwischenraum (78) vorgesehen ist, durch welchen Luft oder ein Austauschmedium aus dem Gebäude (44) leitbar ist.

2. Verwendung einer Pflanzenkläranlage nach Anspruch 1, **dadurch gekennzeichnet, dass** der Zwischenraum (44) dadurch gebildet wird, dass der bzw. die Pflanzenbehälter (50, 54) von dem Gebäudedach (42, 74) beabstandet angeordnet ist bzw. sind, wobei vorzugsweise ein Pflanzenbehälter (50, 54) auf einer Konstruktion, welche beispielsweise Abstandsmittel oder Pfeiler aufweisen könnte, in einem vorgebbaren Abstand zum Gebäudedach (42, 74) beabstandet angeordnet ist.

3. Verwendung einer Pflanzenkläranlage nach Anspruch 1 oder 2, **dadurch gekennzeichnet, dass** der Zwischenraum (78) dadurch gebildet wird, dass ein Pflanzenbehälter (50, 54) mittelbar oder unmittelbar auf dem Gebäudedach (42, 74) angeordnet ist, dass unter einem Pflanzenbehälter (50, 54) oder zwischen mehreren Pflanzenbehältern (50, 54) mindestens ein Schacht vorgesehen ist, durch welchen die Luft oder das Austauschmedium aus dem Gebäude (44) hindurchleitbar ist.

4. Verwendung einer Pflanzenkläranlage nach einem der Ansprüche 1 bis 3, **dadurch gekennzeichnet, dass** der Zwischenraum (78) von zumindest einem Teil des Gebäudedachs, von einem dem Gebäudedach (42, 74) zugewandten Teil des Pflanzenbehälters (50, 54) und von mindestens einer Wand begrenzt wird, wobei eine Wand zwischen Gebäudedach (44) und Pflanzenbehälter (50, 54) angeordnet ist und die Wand bzw. Wände dazu geeignet sind, den Zwischenraum (78) gegenüber der äußeren Umgebung des Gebäudes (44) abzudichten.

5. Verwendung einer Pflanzenkläranlage nach Anspruch 4, **dadurch gekennzeichnet, dass** ein Eintritt und/oder ein Austritt für Luft aus der Umgebung in den Zwischenraum (78) vorgesehen ist.

6. Verwendung einer Pflanzenkläranlage nach einem der Ansprüche 1 bis 5, **dadurch gekennzeichnet, dass** das Gebäudedach (42, 74) ein Flachdach (42) oder ein Spitzdach (74) aufweist.

7. Verwendung einer Pflanzenkläranlage nach Anspruch 6, **dadurch gekennzeichnet, dass** die Luft oder das Austauschmedium aus dem Gebäude (44) an einer unteren Seite des Spitzdachs (74) in einen Zwischenraum (78) einleitbar ist.

8. Verwendung einer Pflanzenkläranlage nach einem der Ansprüche 1 bis 7, **dadurch gekennzeichnet, dass** ein Pflanzenbehälter (50) mindestens zwei Pflanzenbecken (54) aufweist, in welche jeweils Pflanzen eingebracht sind und welche bezüglich eines unmittelbaren Wasserdurchflusses voneinander getrennt sind.

9. Verwendung einer Pflanzenkläranlage nach einem der Ansprüche 1 bis 8, **dadurch gekennzeichnet, dass** mindestens zwei Pflanzenbehälter (50) und/oder mindestens zwei Pflanzenbecken (54) kaskadenförmig zueinander angeordnet sind und vorzugsweise jeweils zueinander einen Höhenunterschied aufweisen.

10. Verwendung einer Pflanzenkläranlage nach einem der Ansprüche 1 bis 9, **dadurch gekennzeichnet, dass** ein Pflanzenbehälter (50) und/oder ein Pflanzenbecken (58) zumindest größtenteils aus leichtem Baumaterial gebildet ist, beispielsweise aus Aluminium.

11. Verwendung einer Pflanzenkläranlage nach einem der Ansprüche 1 bis 10, **dadurch gekennzeichnet, dass** ein Pflanzenbehälter (50) und/oder ein Pflanzenbecken (58) zum Abdichten mit einer Folie abdichtbar ist.

12. Verwendung einer Pflanzenkläranlage nach einem der Ansprüche 1 bis 11, **dadurch gekennzeichnet, dass** ein Pflanzenbehälter (50) und/oder ein Pflanzenbecken (54) mit dem zu reinigenden Wasser horizontal oder vertikal durchströmbar ist, vorzugsweise passiv.

13. Verwendung einer Pflanzenkläranlage nach Anspruch 12, **dadurch gekennzeichnet, dass** eine vertikale und/oder horizontale Durchströmung mit Hilfe von mindestens einem Verbindungsmittel (60) zwischen den einzelnen Pflanzenbecken (50, 54) und/oder mit mindestens einem wasserstromleitenden Mittel erfolgt, beispielsweise in Form von Wandabschnitten in einem Pflanzenbecken (54) bzw. einem Pflanzenbehälter (50).

14. Verwendung einer Pflanzenkläranlage nach einem der Ansprüche 1 bis 13, **dadurch gekennzeichnet, dass** das zu reinigende Wasser von einem Pflanzenbehälter (50) und/oder einem Pflanzenbecken (54) zu einem benachbart angeordneten Pflanzenbehälter (50) und/oder einem Pflanzenbecken (54) frei fällt, insbesondere an einer Abreiskante und/oder in Form eines Wasserfalls.

15. Verwendung einer Pflanzenkläranlage nach einem der Ansprüche 1 bis 14, **dadurch gekennzeichnet, dass** das zu reinigende Wasser von einem Pflanzenbehälter (50) und/oder einem Pflanzenbecken (54) zu einem benachbart angeordneten Pflanzenbehälter (50) und/oder einem Pflanzenbecken (54) aktiv förderbar ist, beispielsweise mittels einer Pumpe.

16. Verwendung einer Pflanzenkläranlage nach einem der Ansprüche 1 bis 15, **dadurch gekennzeichnet, dass** mit der Zuführeinheit (46) das zu reinigende Wasser mit einer Temperatur der Pflanzenkläranlage (10) zuführbar ist, welche im Wesentlichen der Raumtemperatur des Gebäudes (44) entspricht, beispielsweise von 10 bis 30 Grad Celsius.

17. Verwendung einer Pflanzenkläranlage nach einem der Ansprüche 1 bis 16, **dadurch gekennzeichnet, dass** das zu reinigende Wasser mit einer vorgebbaren Fließ- bzw. Strömungsgeschwindigkeit durch einen Pflanzenbehälter (50) bzw. durch ein Pflanzenbecken (54) förderbar ist.

18. Verwendung einer Pflanzenkläranlage nach einem der Ansprüche 1 bis 17, **dadurch gekennzeichnet, dass** das zu reinigende Wasser in unterschiedlichen Reihenfolgen durch das Pflanzenbecken (50) bzw. durch die Pflanzenbehälter (54) leitbar ist, wodurch die Klärwirkung der Pflanzenkläranlage (10) variierbar ist.

19. Verwendung einer Pflanzenkläranlage nach einem der Ansprüche 1 bis 18, **dadurch gekennzeichnet, dass** bezogen auf die Fließrichtung des zu reinigenden Wassers Pflanzen (58) bestimmter Pflanzensorten in den einzelnen Pflanzenbecken (50, 54) anordenbar und/oder verwendbar sind, wodurch die Pflanzenkläranlage (10) auf eine bestimmte Klärwirkung abstimmbar ist.

20. Verwendung einer Pflanzenkläranlage nach einem der Ansprüche 1 bis 19, **dadurch gekennzeichnet, dass** in einem Pflanzenbehälter (50) oder in einem Pflanzenbecken (54) nur Pflanzen (58) einer einzigen Pflanzensorte vorgesehen sind.

21. Verwendung einer Pflanzenkläranlage nach einem der Ansprüche 1 bis 20, **dadurch gekennzeichnet, dass** zwischen den Pflanzenbehältern (50) und/oder zwischen den Pflanzenbecken (54) Mittel (60) vorgesehen sind, mit welchen das zu reinigende Wasser förderbar ist und/oder mit welchen das Niveau (62) bzw. die Wasserhöhe in den einzelnen Pflanzenbehältern (50) bzw. den Pflanzenbecken (54) einstellbar ist.

22. Verwendung einer Pflanzenkläranlage nach Anspruch 21, **dadurch gekennzeichnet, dass** das Mittel (60) ein im Wesentlichen L-förmiges Rohr (60) aufweist, welches vorzugsweise mit seinem längeren Rohrabschnitt im Wesentlichen horizontal und/oder drehbar anordenbar ist.

23. Verwendung einer Pflanzenkläranlage nach einem der Ansprüche 1 bis 22, **dadurch gekennzeichnet, dass** der Pflanzenbehälter (50) und/oder die Pflanzenbecken (54) samt Inhalt derart ausgebildet und angeordnet sind, dass eine vorgebbare Dachlast unter Berücksichtigung einer eventuell auftretenden Schneelast nicht überschritten wird.

24. Verwendung einer Pflanzenkläranlage nach einem der Ansprüche 1 bis 23, **dadurch gekennzeichnet, dass** das durch den Zwischenraum (78) geleitete Austauschmedium beziehungsweise die durch den Zwischenraum (78) geleitete Luft zur Klimatisierung des Gebäudes (44) nutzbar ist.

## Claims

1. Use of a plant-based sewage treatment system for purifying waste water, having at least one plant container (50, 54), a supply unit (46) by way of which the waste water to be treated is suppliable to the plant-based sewage treatment system (10), having a discharge unit (38) by way of which the purified waste water is dischargeable from the plant-based sewage treatment system (10), having plants (58) which are disposed in the plant container (50, 54), wherein the plants (58) are configured in such a manner that they are disposed in the plant container (50, 54) without a substrate, wherein at least part of the plant container (50, 54) is disposed on a roof of a building (42, 74), **characterized in that**, between the plant container (50, 54) and the roof of a building (42, 74), an intermediate space (78) through which air or an exchange medium from the building (44) is conductible, is provided at least in regions.

2. Use of a plant-based sewage treatment system according to Claim 1, **characterized in that** the intermediate space (44) is formed **in that** the plant container/s (50, 54) is/are disposed so as to be spaced apart from the roof of a building (42, 74), wherein preferably one plant container (50, 54) is disposed on a structure, which could, for example, display spacing means or pillars, so as to be spaced apart at a predefinable distance from the roof of a building (42, 74).

3. Use of a plant-based sewage treatment system according to Claim 1 or 2, **characterized in that** the intermediate space (78) is formed **in that** a plant container (50, 54) is directly or indirectly disposed on the roof of a building (42, 74), that, under a plant container (50, 54) or between a plurality of plant containers (50, 54), at least one duct through which the air or the exchange medium is conductible from the building (44) is provided.

4. Use of a plant-based sewage treatment system according to one of Claims 1 to 3, **characterized in that** the intermediate space (78) is delimited by at least part of the roof of a building, by a part of the plant container (50, 54) which faces the roof of a building (42, 74), and by at least one wall, wherein one wall is disposed between the roof of a building (44) and the plant container (50, 54) and the wall or the walls, respectively, are suitable for sealing the intermediate space (78) in relation to the external environment of the building (44).

5. Use of a plant-based sewage treatment system according to Claim 4, **characterized in that** an entry and/or an exit for air from the environment into the intermediate space (78) is provided.

6. Use of a plant-based sewage treatment system according to one of Claims 1 to 5, **characterized in that** the roof of a building (42, 74) displays a flat roof (42) or a pitched roof (74).

7. Use of a plant-based sewage treatment system according to Claim 6, **characterized in that** the air or the exchange medium from the building (44) is conductible on a lower side of the pitched roof into an intermediate space (78).

8. Use of a plant-based sewage treatment system according to one of Claims 1 to 7, **characterized in that** a plant container (50) displays at least two plant pools (54) into which in each case plants are introduced and which are separated from one another in relation to a direct continuous flow of water.

9. Use of a plant-based sewage treatment system according to one of Claims 1 to 8, **characterized in that** at least two plant containers (50) and/or at least two plant pools (54) are disposed so as to be cascade-like in relation to one another and preferably in each case display a height differential in relation to one another.

10. Use of a plant-based sewage treatment system according to one of Claims 1 to 9, **characterized in that** a plant container (50) and/or a plant pool (58) are/is at least largely formed from light construction materials, for example from aluminium.

11. Use of a plant-based sewage treatment system according to one of Claims 1 to 10, **characterized in that** a plant container (50) and/or a plant pool (58), for sealing, is sealable with a film.

12. Use of a plant-based sewage treatment system according to one of Claims 1 to 11, **characterized in that** a flow of the water to be purified is horizontally or vertically passable, preferably in a passive manner, through a plant container (50) and/or a plant pool (54).

13. Use of a plant-based sewage treatment system according to Claim 12, **characterized in that** a vertical and/or horizontal flow passage takes place by means of at least one connection means (60) between the individual plant pools (50, 54) and/or with at least one means conducting a flow of water, for example in the form of wall sections in a plant pool (54) or a plant container (50), respectively.

14. Use of a plant-based sewage treatment system according to one of Claims 1 to 13, **characterized in that** the water to be purified freely falls, in particular on a break-away edge and/or in the form of a waterfall, from a plant container (50) and/or a plant pool (54) to an adjacently disposed plant container (50) and/or a plant pool (54).

15. Use of a plant-based sewage treatment system according to one of Claims 1 to 14, **characterized in that** the water to be purified is actively conveyable, for example by means of a pump, from a plant container (50) and/or a plant pool (54) to an adjacently disposed plant container (50) and/or a plant pool (54).

16. Use of a plant-based sewage treatment system according to one of Claims 1 to 15, **characterized in that**, with the supply unit (46), the water to be purified is suppliable to the plant-based sewage treatment system (10) at a temperature which substantially corresponds to the room temperature of the building (44), for example of 10 to 30 degrees Celsius.

17. Use of a plant-based sewage treatment system according to one of Claims 1 to 16, **characterized in that** the water to be purified is conveyable at a predefinable stream or flow speed, respectively, through a plant container (50) or a plant pool (54), respectively.

18. Use of a plant-based sewage treatment system according to one of Claims 1 to 17, **characterized in that** the water to be purified is conductible in various sequences through the plant pool (50) or through the plant containers (54), respectively, on account of which the sewage treatment effect of the plant-based sewage treatment system (10) is variable.

19. Use of a plant-based sewage treatment system according to one of Claims 1 to 18, **characterized in that**, in relation to the streaming direction of the water to be purified, plants (58) of specific plant species are disposable and/or usable in the individual plant pools (50, 54), on account of which the plant-based sewage treatment system (10) is adaptable to a specific sewage treatment effect.

20. Use of a plant-based sewage treatment system according to one of Claims 1 to 19, **characterized in that** in one plant container (50) or in one plant pool (54) only plants (58) of a single plant species are provided.

21. Use of a plant-based sewage treatment system according to one of Claims 1 to 20, **characterized in that**, between the plant containers (50) and/or between the plant pools (54), means (60) by way of which the water to be purified is conveyable and/or by way of which the gauge (62) or the water level, respectively, in the individual plant containers (50) or the plant pools (54), respectively, is adjustable, are provided.

22. Use of a plant-based sewage treatment system according to Claim 21, **characterized in that** the means (60) displays a substantially L-shaped pipe (60) which preferably with its longer pipe portion is disposable so as to be substantially horizontal and/or rotatable.

23. Use of a plant-based sewage treatment system according to one of Claims 1 to 22, **characterized in that** the plant container (50) and/or the plant pools (54), together with their contents, are configured and disposed in such a manner that a predefinable roof load, considering a potentially arising snow load, is not exceeded.

24. Use of a plant-based sewage treatment system according to one of Claims 1 to 23, **characterized in that** the exchange medium conducted through the intermediate space (78) or the air conducted through the intermediate space (78), respectively, is utilizable for climatization of the building (44).

## Revendications

1. Utilisation d'une installation d'épuration végétale pour épurer de l'eau usée, l'installation présentant au moins un récipient (50, 54) à végétaux, une unité d'amenée (46) par laquelle l'eau usée à épurer peut être amenée à l'installation (10) d'épuration végétale, une unité d'évacuation (38) par laquelle l'eau usée épurée peut être extraite de l'installation (10) d'épuration végétale,
des végétaux (58) étant disposés dans le récipient (50, 54) à végétaux,
les végétaux (58) étant configurés de manière à être disposés dans le récipient (50, 54) à végétaux sans substrat,
au moins une partie du récipient (50, 54) à végétaux étant disposée sur le toit (42, 74) d'un bâtiment,
**caractérisée en ce que**
un espace intermédiaire (78) par lequel de l'air ou un fluide d'échange provenant du bâtiment (44) peuvent être amenés est prévu en au moins certains emplacements situés entre le récipient (50, 54) à végétaux et le toit (42, 74) du bâtiment.

2. Utilisation d'une installation d'épuration végétale selon la revendication 1, **caractérisée en ce que** l'espace intermédiaire (44) est formé en disposant le ou les récipients (50, 54) à végétaux à distance du toit (42, 74) du bâtiment et **en ce qu'**un récipient (50, 54) à végétaux est de préférence disposé sur une structure qui peut présenter par exemple des moyens d'écartement ou des colonnes, à une distance prédéterminée du toit (42, 74) du bâtiment.

3. Utilisation d'une installation d'épuration végétale selon les revendications 1 ou 2, **caractérisée en ce que** l'espace intermédiaire (78) est formé en disposant un récipient (50, 54) à végétaux directement ou indirectement sur le toit (42, 74) du bâtiment, **en ce qu'**au moins un puits par lequel l'air ou le fluide d'échange provenant du bâtiment (44) peut être passé est prévu en dessous d'un récipient (50, 54) à végétaux ou entre plusieurs récipients (50, 54) à végétaux.

4. Utilisation d'une installation d'épuration végétale selon l'une des revendications 1 à 3, **caractérisée en ce que** l'espace intermédiaire (78) est délimité par au moins une partie du toit du bâtiment, par une partie du récipient (50, 54) à végétaux tournée vers le toit (42, 74) du bâtiment et par au moins une paroi, une paroi étant disposée entre le toit (44) du bâtiment et le récipient (50, 54) à végétaux et la ou les parois permettant de fermer de manière hermétique l'espace intermédiaire (78) vis-à-vis de l'environnement extérieur du bâtiment (44).

5. Utilisation d'une installation d'épuration végétale selon la revendication 4, **caractérisée en ce qu'**une entrée et/ou une sortie pour l'air provenant de l'environnement est prévue dans l'espace intermédiaire (78).

6. Utilisation d'une installation d'épuration végétale selon l'une des revendications 1 à 5, **caractérisée en ce que** le toit (42, 74) du bâtiment est un toit plat (42) ou un toit en pente (74).

7. Utilisation d'une installation d'épuration végétale selon la revendication 6, **caractérisée en ce que** l'air ou le fluide d'échange provenant du bâtiment (44) peut être introduit dans un espace intermédiaire (78) situé sur le côté inférieur du toit en pente (74).

8. Utilisation d'une installation d'épuration végétale selon l'une des revendications 1 à 7, **caractérisée en ce qu'**un récipient (50) à végétaux présente au moins deux bacs (54) à végétaux dans chacun desquels des végétaux sont placés et qui sont séparés l'un de l'autre pour empêcher une traversée directe par l'eau.

9. Utilisation d'une installation d'épuration végétale selon l'une des revendications 1 à 8, **caractérisée en ce qu'**au moins deux récipients (50) à végétaux et/ou au moins deux bacs (54) à végétaux sont disposés l'un par rapport à l'autre en cascade et présentent de préférence une différence de hauteur l'un par rapport à l'autre.

10. Utilisation d'une installation d'épuration végétale selon l'une des revendications 1 à 9, **caractérisée en ce qu'**un récipient (50) à végétaux et/ou un bac (58) à végétaux sont formés au moins pour leur plus grande partie d'un matériau léger, par exemple d'aluminium.

11. Utilisation d'une installation d'épuration végétale selon l'une des revendications 1 à 10, **caractérisée en ce qu'**un récipient (50) à végétaux et/ou un bac (58) à végétaux peuvent être fermés hermétiquement par un film.

12. Utilisation d'une installation d'épuration végétale selon l'une des revendications 1 à 11, **caractérisée en ce qu'**un récipient (50) à végétaux et/ou un bac (54) à végétaux peuvent être traversés horizontalement ou verticalement par l'eau à épurer, de préférence passivement.

13. Utilisation d'une installation d'épuration végétale selon la revendication 12, **caractérisée en ce qu'**un balayage vertical et/ou horizontal s'effectue à l'aide d'au moins un moyen de raccordement (60) entre les différents bacs (50, 54) à végétaux et/ou à l'aide d'au moins un moyen de guidage, qui présente par exemple la forme de section de paroi prévue dans un bac (54) à végétaux ou dans un récipient (50) à végétaux.

14. Utilisation d'une installation d'épuration végétale selon l'une des revendications 1 à 13, **caractérisée en ce que** l'eau à épurer s'écoule librement d'un récipient (50) à végétaux et/ou d'un bac (54) à végétaux en direction d'un récipient (50) à végétaux et/ou d'un bac (54) à végétaux disposés en position voisine, en particulier sur un bord de débordement et/ou sous la forme d'une chute d'eau.

15. Utilisation d'une installation d'épuration végétale selon l'une des revendications 1 à 14, **caractérisée en ce que** l'eau à épurer peut être transportée activement depuis un récipient (50) à végétaux et/ou à un bac (54) à végétaux vers un récipient (50) à végétaux et/ou un bac (54) à végétaux disposés en position voisine, par exemple au moyen d'une pompe.

16. Utilisation d'une installation d'épuration végétale selon l'une des revendications 1 à 15, **caractérisée en ce que** l'eau à épurer peut être amenée à l'installation (10) d'épuration végétale par l'unité d'amenée (46) à une température qui correspond essentiellement à la température ambiante du bâtiment (44), par exemple de 10 à 30° Celsius.

17. Utilisation d'une installation d'épuration végétale selon l'une des revendications 1 à 16, **caractérisée en ce que** l'eau à épurer peut être transportée à travers un récipient (50) à végétaux et/ou un bac (54) à végétaux à une vitesse d'écoulement prédéterminée.

18. Utilisation d'une installation d'épuration végétale selon l'une des revendications 1 à 17, **caractérisée en ce que** l'eau à épurer peut être guidée à travers le bac (50) à végétaux et/ou le récipient (54) à végétaux en différentes successions, ce qui permet de modifier l'effet d'épuration de l'installation (10) d'épuration végétale.

19. Utilisation d'une installation d'épuration végétale selon l'une des revendications 1 à 18, **caractérisée en ce que** selon la direction d'écoulement de l'eau à épurer, des végétaux (58) de type défini peuvent être disposés et/ou utilisés dans les différents bacs (50, 54) à végétaux, ce qui permet de régler l'installation (10) d'épuration végétale à un effet d'épuration défini.

20. Utilisation d'une installation d'épuration végétale selon l'une des revendications 1 à 19, **caractérisée en ce que** seuls des végétaux (58) d'une seule sorte de végétaux sont prévus dans un récipient (50) à végétaux ou dans un bac (54) à végétaux.

21. Utilisation d'une installation d'épuration végétale selon l'une des revendications 1 à 20, **caractérisée en ce que** des moyens (60) qui permettent de transporter l'eau à épurer et/ou d'ajuster le niveau (62) ou la hauteur de l'eau dans les différents récipients (50) à végétaux ou bacs (54) à végétaux sont prévus entre les récipients (50) à végétaux et/ou entre les bacs (54) à végétaux.

22. Utilisation d'une installation d'épuration végétale selon la revendication 21, **caractérisée en ce que** le moyen (60) présente un tube (60) essentiellement en forme de L dont de préférence le long tronçon tubulaire peut être disposé essentiellement à l'horizontale et/ou à rotation.

23. Utilisation d'une installation d'épuration végétale selon l'une des revendications 1 à 22, **caractérisée en ce que** le récipient (50) à végétaux et/ou le bac (54) à végétaux, y compris leur contenu, sont configurés et disposés de manière à ne pas dépasser une charge prédéterminée sur le toit, en tenant compte de la charge éventuellement exercée par la neige.

24. Utilisation d'une installation d'épuration végétale selon l'une des revendications 1 à 23, **caractérisée en ce que** le fluide d'échange conduit à travers l'espace intermédiaire (78) et/ou l'air conduit à travers l'espace intermédiaire (78) peuvent être utilisés pour climatiser le bâtiment (44).
